(19) **Europäisches Patentamt / European Patent Office / Office européen des brevets**

(11) **EP 1 725 860 B1**

(12) **EUROPEAN PATENT SPECIFICATION**

(45) Date of publication and mention
of the grant of the patent:
**12.08.2009 Bulletin 2009/33**

(51) Int Cl.:
*G01N 27/08* (2006.01)  *G01N 27/447* (2006.01)
*G01N 30/64* (2006.01)

(21) Application number: **04741746.4**

(22) Date of filing: **07.06.2004**

(86) International application number:
**PCT/EP2004/051051**

(87) International publication number:
**WO 2005/095935 (13.10.2005 Gazette 2005/41)**

(54) **CONTACTLESS DETECTION CELL**

KONTAKTLOSE MESSZELLE

CELLULE DE DÉTECTION SANS CONTACT

(84) Designated Contracting States:
**CH DE FR GB LI**

(30) Priority: **05.03.2004 US 550745 P**

(43) Date of publication of application:
**29.11.2006 Bulletin 2006/48**

(73) Proprietor: **Agilent Technologies, Inc.
Santa Clara, CA 95051 (US)**

(72) Inventors:
- **KALTENBACH, Patrick
  Agilent Tech. Deutschland GmbH
  76337 Waldbronn (DE)**
- **WITT, Klaus,
  Agilent Technologies Deutschland GmbH
  76337 Waldbronn (DE)**
- **GAS, Bohuslav
  254 01 Jilove u Prahy (CZ)**
- **VAN DE GOOR, Tom
  Foster City, CA 94404 (US)**

(74) Representative: **Barth, Daniel Mathias
  Agilent Technologies Deutschland GmbH
  Patentabteilung
  Herrenberger Strasse 130
  71034 Böblingen (DE)**

(56) References cited:
WO-A-00/75650  US-A- 3 759 816
US-A1- 2002 067 174  US-A1- 2003 222 664

- HANNA M ET AL: "Novel three-dimensional capillary electrophoresis system for complex and trace analysis" JOURNAL OF CHROMATOGRAPHY, ELSEVIER SCIENCE PUBLISHERS B.V. AMSTERDAM, NL, vol. 894, no. 1-2, 13 October 2000 (2000-10-13), pages 117-128, XP004218163 ISSN: 0021-9673 -& ZEMANN A J ET AL.: "Contactless Conductivity Detection for Capillary Electrophoresis" ANALYTICAL CHEMISTRY, vol. 70, no. 3, 1 February 1998 (1998-02-01), pages 563-567, XP002302491
- MAYRHOFER K ET AL.: "Capillary Electrophoresis and Contactless Conductivity Detection of Ions in Narrow Inner Diameter Capillaries" ANALYTICAL CHEMISTRY, vol. 71, no. 17, 1 September 1999 (1999-09-01), pages 3828-3833, XP002302492

**Description**

BACKGROUND OF THE INVENTION

The present invention relates to contactless detection for detecting an electrical property of one or more sample compounds in a flow path.

Contactless detection of an electrical property of sample compounds has become an important alternative to optical detection techniques. For example, in the field of analyzing ions in liquid samples, contactless conductivity detection (CCD) has become a competitive technique.

Various aspects and embodiments relating to contactless detection are disclosed by M. Hanna et al., "Novel three-dimensional capillary electrophoresis system for complex and trace analysis", J. Chromatogr. A894 (2000) 117; 128; A.J. Zemann et all., "Contactless Conductivity Detection for Capillary Electrophoresis", Anal. Chem. 70 (1998) 563-567; US 2002/0067174 A1
K. Mayrhofer et al., "Capillary Electrophoresis and Contacless Conductivity Detection of Ions in Narrow Inner Diameter Capillaries", Anal. Chem. 71 (1999) 3828-3833; or WO 00/75650 A1.

US 2003/0222664 A1, by the same applicant, discloses a high frequency contactless heating with temperature and/or conductivity monitoring. The teaching thereof forms the preamble to claim 1.

SUMMARY OF THE INVENTION

It is an object of the invention to provide an improved contactless detection of an electrical property of one or more sample compounds in a flow path. The object is solved by the independent claims. Preferred embodiments are shown by the dependent claims.

According to the present invention, a contactless detection cell for detecting an electrical property of one or more sample compounds in a flow path is provided. The contactless detection cell comprises a transmitter electrode adapted for capacitively coupling an AC current into a detection channel of the flow path, and a receiver electrode adapted for receiving the AC current that has been coupled into the detection channel. An inner cross-section in at least a section of the detection channel is different than an inner cross-section of the flow path towards the detection channel.

When the inner cross-section in at least a section of the detection flow path is varied independently of the dimensions of the preceding flow path, it is possible to optimize the geometry of the detection channel according to the needs imposed by the respective contactless detection technique.

There exist a variety of different parameters that describe the behaviour of a contactless detection cell. According to embodiments of the present invention, one or more of said parameters can be affected by adjusting the geometry of the detection channel. One important parameter is the separation power of the contactless detection cell, which determines the resolution of the obtained results. A further aspect is cross-talk between the transmitter electrode and the receiver electrode, which impairs the quality of the obtained results or spectra. Cross talk occurs if the AC field emitted by the transmitter electrode is directly received by the receiver electrode, without passing through the sample volume.

Another important parameter is the detection cell's sensitivity. A detection cell with high sensitivity allows detecting small concentrations of sample compounds. The more sensitive the cell is, the smaller the respective limits of detection (LODs) for the various compounds will be. Sensitivity is closely related to the signal-to-noise ratio of the measurement, whereby a large signal-to-noise ratio corresponds to a high sensitivity.

By choosing the inner cross-section of at least a part of the detection channel independently of the preceding flow path's cross section, an additional degree of freedom is gained. This additional degree of freedom can e.g. be used for improving any property of the detection cell, for example for at least one of: increasing the separation power, improving the signal-to-noise ratio, reducing cross talk, etc. Besides that, this additional degree of freedom might as well be used for modifying any other property of the detection cell that has not been mentioned yet, in order to improve the detection cell's properties in a given context.

According to the invention, the resistance of the sample volume in the detection channel is increased by lowering the inner cross section of the detection flow path between the transmitter electrode and the receiver electrode. By narrowing the detection channel, the sample volume is stretched and spread out, and its resistance is increased. As a consequence, variations in resistance caused by the various sample compounds are enhanced and can be monitored more precisely. The signal-to-noise level is increased, and the detection cell's sensitivity is improved. Furthermore, by narrowing the detection channel, the analyte's resistance becomes the most significant contribution to the overall impedance measured between the electrodes.

In an embodiment of the invention, the transmitter electrode and the receiver electrode are arranged in an axial geometry. In case the detection cell volume is kept sufficiently small, the axial approach allows to record the analyte bands with good resolution.

According to a preferred embodiment, the transmitter electrode and the receiver electrode are separated by a distance that is sufficiently large for reducing or even avoiding distortions related to cross-talk. On the one hand, by increasing the distance between the electrodes, the amount of cross-talk can be reduced. On the other hand, by increasing the distance between the electrodes, the detection cell's volume might be increased as well, and as a consequence, the resolution of the obtained measurements might be lowered. However, by reducing the inner cross section, the detection cell volume can be kept small without bringing the electrodes too close together. Hence, it is possible to provide a detection cell with a small detection cell volume and with electrodes that are axially spaced apart by a rather large distance. As a result, the detection cell has low susceptibility to cross talk and yields high-resolution measurements.

According to a preferred embodiment of the invention, the inner cross-section of the detection channel is kept small throughout the detection channel. Within the entire detection channel, the inner cross-section is constant. This might e.g. be advantageous from a manufacturing point of view.

According to an alternative embodiment, the inner cross-section of the detection channel is axially varied in a way that, at the locations of the electrodes, its inner diameter is large, whereas between the electrodes, its inner cross-section is small. Thus, an hour-glass shaped detection channel is obtained. This geometry might also be referred to as an "inverted bubble". By increasing the inner diameter at the sites where the ring-shaped electrodes are located, the capacitive coupling between the transmitter electrode and the sample is improved, and the capacitive coupling between the receiver electrode and the sample is improved as well. Together with the sample, the respective electrode represents a capacitance. By increasing the inner diameter of the detection channel at the locations of the electrodes, the effective "surface" of the respective capacitance is increased, while the distance between the sample and the electrode is decreased. As a result, the respective capacitances are increased. Due to the improved capacitive coupling, the resistance of the sample between the electrodes can be measured more accurately, because it provides the major contribution to the total (complex) impedance between the electrodes.

In a preferred embodiment, the detection channel is implemented by means of a capillary with a reduced inner cross-section in the portion between the transmitter electrode and the receiver electrode. One common way of realizing a migration flow path is to use a glass capillary.

In a preferred embodiment, between the transmitter electrode and the receiver electrode, the inner diameter of the capillary is equal to about 0.1 $\mu$m to 200 $\mu$m, further preferably 1.0 $\mu$m to 20 $\mu$m. Between the electrodes, the ratio of the capillary's outer diameter to the capillary's inner diameter is equal to about 1.1 to 50, preferably 1.5 to 10.

According to an alternative embodiment of the invention, the detection channel shape is implemented using microstructuring technologies as common for making microfluidic chip devices. Such microstructuring technologies might e.g. include etching, laser ablation, direct molding. Using these techniques, the detection channel can be shaped with high precision. Microsystem technologies allow for an accurate positioning of contactless electrodes relative to the detection volume. In yet another preferred embodiment, the detection channel is implemented as a part of a microfluidic chip device.

In a further preferred embodiment, the electrical property is at least one of: conductivity, complex conductivity, impedance, resistance, reactance, relative permittivity. When an analyte band passes through the detection cell, any of these electrical properties might be modified. Hence, by monitoring the respective electrical property, it is possible to detect the respective analyte band. In particular, the detection cell might e.g. be adapted for detecting conductivity of the sample compounds. In this case, the detection cell is commonly referred to as a contactless conductivity detection (CCD) cell. The present invention is not limited to CCD detection, though.

According to a preferred embodiment, the one or more sample compounds have been separated in a preceding separation flow path. First, the various sample compounds are separated as they migrate through the separation flow path. Then, the analyte bands can be analyzed by the detection cell.

According to another preferred embodiment, the inner cross-section of the detection channel is smaller than the inner cross-section of the flow path towards the detection channel. In the separation flow path, it might be advantageous to use a large-bore capillary, because a large-bore capillary provides a sufficient sample loading capability. A large-bore capillary allows to inject a well-defined sample plug of sufficient volume into the separation flow path. However, in the detection flow path, it might be advantageous, especially with regard to cross talk, sensitivity, separation power, etc., to utilize a capillary with a rather small inner diameter.

According to an alternative embodiment, the inner cross-section of the detection channel might as well be greater than the inner cross-section of the flow path towards the detection channel.

A separation system according to embodiments of the present invention comprises a separation flow path adapted for separating sample compounds of a given sample, and a contactless detection cell of the type described above.

According to a preferred embodiment, the separation system is at least one of: an electrophoresis system, a liquid chromatography system, an electrochromatography system, or a combination thereof. The contactless detection cell can be used together with each of these techniques.

In a preferred embodiment, the separation system is employed for ion analysis. The presence of ions or ionizable compounds in the sample modifies the conductivity of the sample, and for this reason, contactless detection, in particular CCD, is well-suited for detecting analyte bands that correspond to different types of ions or ionizable compounds. Ion analysis might e.g. be employed for analysing beverages (beer, wine, mineral water, juice, etc.), for analysing cooling water of a power plant, etc.

BRIEF DESCRIPTION OF THE DRAWINGS

Other objects and many of the attendant advantages of the present invention will be readily appreciated and become better understood by reference to the following detailed description when considering in connection with the accompanied drawings. Features that are substantially or functionally equal or similar will be referred to with the same reference sign(s).

Fig. 1    shows a measurement set-up comprising a contactless detection cell;

Fig. 2    shows a detection flow path;

Fig. 3    depicts three electropherograms that have been recorded for three different inner diameters of the detection channel;

Fig. 4    shows a detection flow path according to an embodiment of the invention; and

Fig. 5    shows an equivalent circuit of a contactless detection cell.

DETAILED DESCRIPTION OF EMBODIMENTS OF THE INVENTION

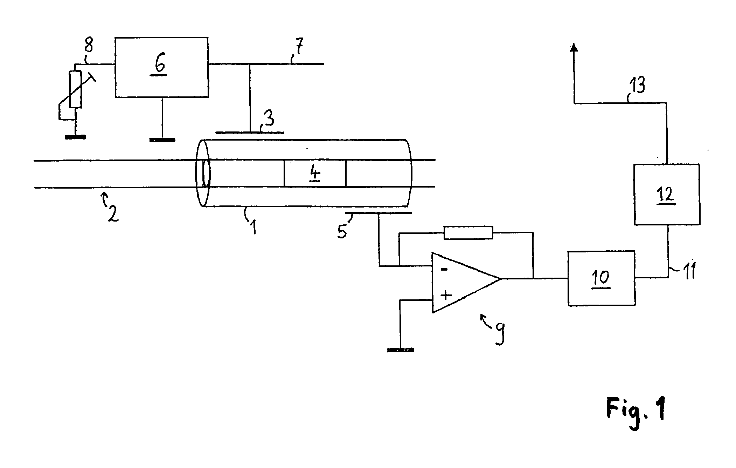

In Fig. 1, a measurement set-up comprising a contactless detection cell is depicted. The contactless detection cell 1 is adapted for detecting compounds that have migrated through a preceding separation flow path 2, whereby the separation flow path 2 might e.g. be part of a capillary electrophoresis (CE) system, or of a liquid chromatography (LC) system, etc. The contactless detection cell 1 comprises a transmitter electrode 3 that is adapted for applying an AC field to the detection volume 4, and a receiver electrode 5 that is adapted for detecting the AC current that passes through the detection volume 4. The transmitter electrode 3 and the receiver electrode 5 are arranged in an axial geometry, which means that they are spaced apart by a certain distance in the direction of the flow. The transmitter electrode 3 is connected to a high frequency (HF) AC power supply 6 that provides a HF AC voltage signal 7 to the transmitter electrode 3, whereby the frequency of the HF AC voltage might e.g. range from several kHz to several hundred MHz. The amplitude of the HF AC voltage signal is determined by a control voltage 8 that is input to the HF AC power supply 6.

The receiver electrode 5 is connected to a current/voltage converter 9, which is adapted for converting the received AC current into a corresponding voltage signal. This voltage signal is provided to a rectifier and filter unit 10. At the output of the rectifier and filter unit 10, an analogue DC signal 11 is obtained, with said DC signal 11 indicating the conductivity of the detection volume 4. By means of an analogue/digital converter 12, the analogue DC signal 11 is converted into a corresponding conductivity read-out 13.

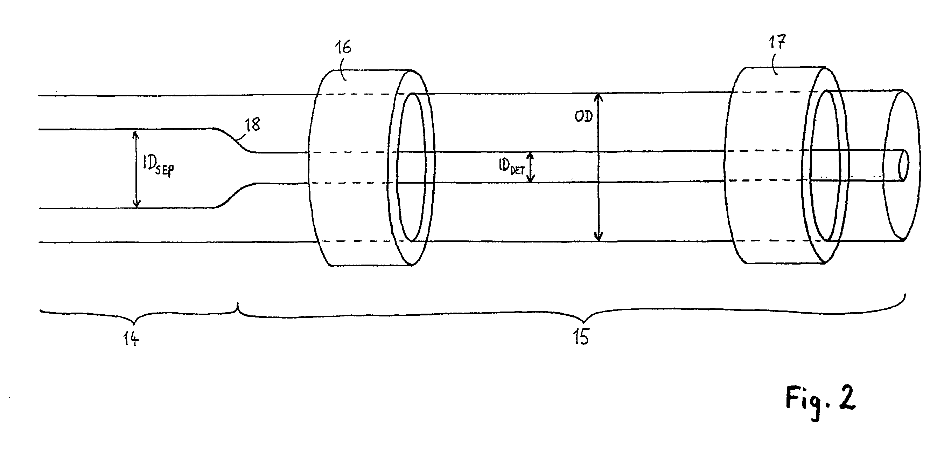

Fig. 2 shows the geometry of a contactless detection cell which does not fall within the scope of the claims. In Fig. 2, a part of the separation flow path 14 is shown together with a contactless detection cell 15. The contactless detection cell 15 comprises a transmitter electrode 16 that is implemented as a ring-shaped electrode. The ring-shaped electrode and the solute form a capacitance, and via said ring-shaped electrode, an AC current can be capacitively coupled to the solute. The receiver electrode 17 is axially separated from the transmitter electrode 16 by an axial distance L. The receiver electrode 17 is also realized as a ring-shaped electrode, with said ring-shaped electrode and the solute forming a capacitance. The receiver electrode 17, which is capacitively coupled to the solute, may receive and detect an AC current that has been coupled to the solvent via the transmitter electrode 16.

By recording electrical properties of the solvent as a function of time, it is possible to detect the various different analyte bands. The separation power of the contactless detection cell 15 is mainly determined by the detection volume encompassed between the transmitter electrode 16 and the receiver electrode 17. Of course, one might think of bringing the two electrodes rather close together, in order to improve the resolution. However, if the electrodes are brought within close proximity of each other, a phenomenon referred to as cross talk will deteriorate the obtained signal. Cross talk occurs if the AC field emitted by the transmitter electrode is directly received by the receiver electrode, without passing through the sample volume.

The following example calculation will help to understand how the half-width of an analyte band that migrates through the separation flow path can be determined. The axial dispersion due to diffusion, $s^2$, is given by the formula

$$s^2 = 2\,D\cdot t$$

with D being the diffusion coefficient, and with t being the migration time. Typical diffusion coefficients of medium-molecular analytes range from $2\times10^{-10}$ $m^2s^{-1}$ to $5\times10^{-10}$ $m^2s^{-1}$, and typical migration times range from 30s to 100s. When the lower limits of these ranges are inserted into the above equation, the axial dispersion of the analyte band is obtained as $s^2 = 1.2 \times 10^{-8}$ $m^2$. In case a Gaussian shape of the analyte band is assumed, the half-width p of the analyte band can be expressed as $p = 2.35\ s \approx 0.25$ mm.

This result shows that for detecting the analyte bands with good resolution, the two electrodes of the detection cell have to be moved very close together. However, if the electrodes are moved that close together, cross talk will occur, which means that the HF field emitted by the transmitter electrode will be directly coupled to the receiver electrode, and the detected AC signal will be disturbed.

According to the present invention, at least in a part of the flow path between the two electrodes, the inner diameter of the detection flow path is reduced. As a consequence, the detection cell volume is decreased without bringing the electrodes too close together.

In Fig. 2, the inner diameter $ID_{DET}$ of the detection flow path is considerably smaller than the inner diameter $ID_{SEP}$ of the preceding separation flow path. Between the two portions of the flow path, a shoulder 18 is formed. The rather small volume of the detection cell allows to separately detect each of the analyte bands with sufficient resolution. By reducing the detection cell volume, the separation power of the instrument is improved. The transmitter electrode 16 and the receiver electrode 17 can be placed sufficiently far apart from each other to avoid - or at least reduce - cross talk between them, whereby the detection cell volume still remains sufficiently small for obtaining a good resolution.

There is still another reason why the distance L between the transmitter electrode 16 and the receiver electrode 17 should not become too small. The AC current that passes through the detection cell tends to heat up the detection cell. Therefore, cooling facilities have to be provided, in particular at the portion of the detection flow path between the transmitter electrode 16 and the receiver electrode 17. In this respect, it is advantageous if the distance L between the two electrodes does not become too small.

As the inner diameter $ID_{SEP}$ of the separation flow path 14 is rather large and exceeds the inner diameter $ID_{DET}$ of the detection flow path, it is possible to inject a sample plug of considerable volume into the separation flow path, whereby said sample plug does not spread too much in the axial direction. With $ID_{SEP} > ID_{DET}$, a superior definition of the injection plug is obtained. The sample-loading capability of the large-bore capillary of the separation flow path can be combined with the superior separation power and sensitivity of the narrow-bore capillary that is employed in the detection flow path.

The separation flow path and the detection flow path can be implemented by means of a glass capillary having two different inner cross sections. The inner diameter $ID_{DET}$ in the portion of the detection cell might e.g. be equal to 50 $\mu$m, while the glass capillary's outer diameter OD might be as large as 360 $\mu$m, in order to avoid disruptive discharge (or HV breakdown).

Instead of utilizing a glass capillary, the electromigration channel and the detection flow path might as well be realized by means of a microfluidic chip device. The microfluidic chip device allows for more convenient ways of shaping the geometry of the flow path. Microfluidic chips commonly comprise two or more substrates that are arranged in a sandwich layer structure. The structure can e.g. be crafted by etching, laser ablation or by direct molding. Then, the different substrates are annealed or bonded. Microsystem technologies allow for a precise positioning of the electrodes relative to the detection channel.

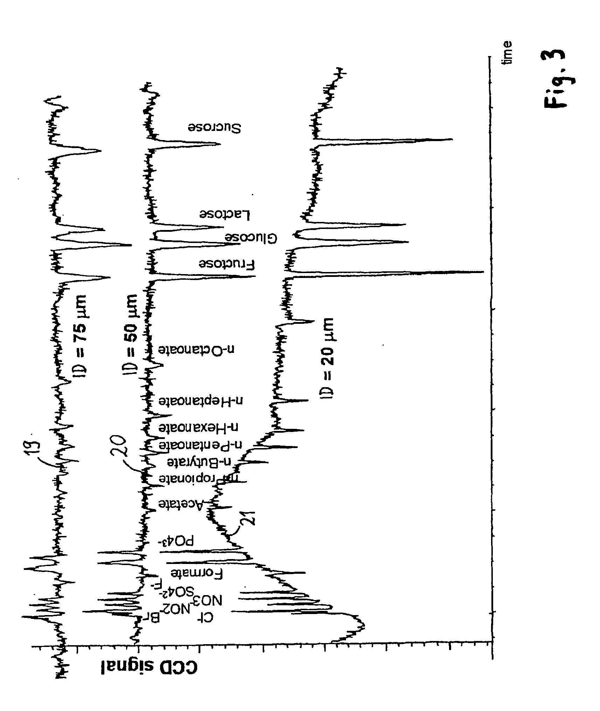

Another important property in the field of contactless detection is the signal-to-noise ratio of the recorded signal. The signal-to-noise ratio is a measure for the system's sensitivity, whereby a large signal-to-noise ratio corresponds to a high sensitivity. In Fig. 3, three different electrophoresis contactless conductivity detector traces are shown. I n the following, the measuring conditions are given in more detail:

| | |
|---|---|
| Buffer: | Agilent Basic Anion Buffer (PN 5064-8209) |
| Sample: | Phosphate 100 mg/l, Carbohydrates 200 mg/l each, others 50 mg/l each |
| Preconditioning: | 4 min at run buffer |
| Capillary: | fused silica |
| Injection: | 400 mbar*s |
| Temperature: | 30°C |
| Voltage: | -20 kV (reversed polarity) |
| Current: | -36 $\mu$A |
| Detection: | CCD Data Rate 2 Hz |

The respective CCD signals are depicted as a function of time, whereby curve 19 corresponds to an inner diameter of 75 $\mu$m, whereby curve 20 relates to ID = 50 $\mu$m, and whereby curve 21 has been recorded utilizing a capillary with an inner diameter of 20 $\mu$m. In order to simplify the comparison of the respective signal-to-noise ratios of curves 19, 20, 21, the curves have been individually scaled in a way that their respective noise levels have been brought to one common value. An offset is added to bring these traces inside a common window.

The electropherogram that has been recorded for a narrow-bore capillary (ID = 20 $\mu$m) shows the largest peaks, whereas the electropherogram obtained for the large-bore capillary (ID = 75 $\mu$m) comprises peaks of a relatively small height. By utilizing a detection flow path with a small inner diameter (ID = 20 $\mu$m), an excellent signal-to-noise ratio can be achieved, whereas a capillary with a large inner diameter (ID = 75 $\mu$m) leads to a signal-to-noise ratio that is considerably smaller. The conclusion is that by reducing the inner diameter within the detection flow path, or within parts thereof, it is possible to improve both the separation power (resolution) and the sensitivity (the signal-to-noise ratio) of the contactless detection. Though the absolute amount of the respective sample compound encompassed between the two electrodes becomes smaller when the inner diameter is reduced, a superior signal quality is obtained.

The increase in sensitivity can also be expressed in terms of the limit of detection (LOD), which is defined as the minimum concentration of a certain substance that allows to distinguish the corresponding measurement peak from the underlying noise level. By reducing the inner diameter of the detection flow path, the limit of detection for the respective sample compound is decreased.

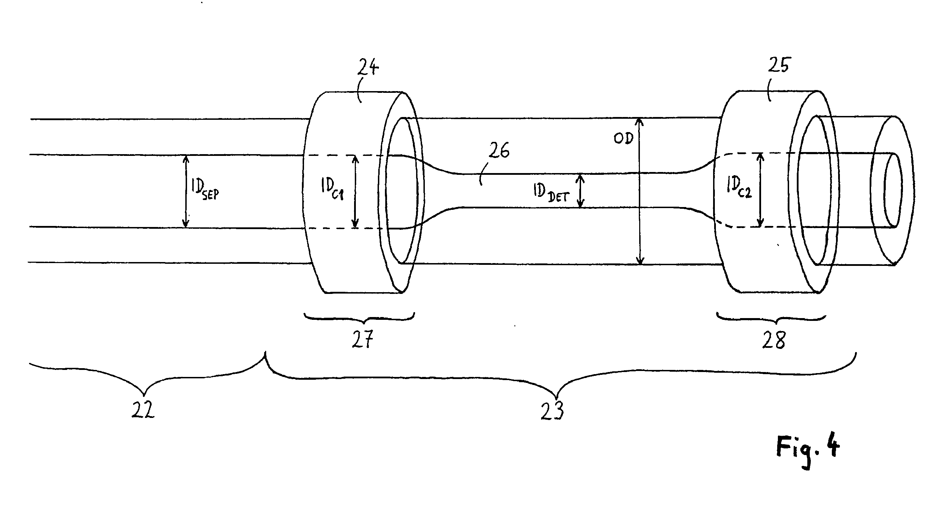

Fig. 4 shows an embodiment of the present invention. Sample compounds that have migrated through a separation flow path 22 are subsequently analyzed by a contactless detection cell 23. Between the electrodes 24, 25, the inner diameter $ID_{DET}$ of the detection channel is reduced relative to the inner diameter $ID_{SEP}$ of the preceding separation flow path 22. Thus, the volume of the detection cell volume 26 is decreased without reducing the distance between the two electrodes 24, 25. By decreasing the detection cell volume 26, both resolution and sensitivity of the contactless detection cell can be improved. Furthermore, at the sites 27, 28 of the flow path where the electrodes 24, 25 are located, the respective inner diameters $ID_{C1}$ and $ID_{C2}$ are increased relative to the inner diameter $ID_{DET}$ in the section of the flow path between the electrodes 24, 25, and an hour-glass shaped geometry of the detection cell is obtained. In this respect, the embodiment shown in Fig. 4 differs from the embodiment of Fig. 2.

Because of $ID_{C1} > ID_{DET}$, the capacitance $C_1$ formed by the ring-shaped electrode 24 and the sample is increased, and as a consequence, the capacitive coupling between the electrode 24 and the sample is improved, Accordingly, because of $ID_{C2} > ID_{DET}$, the capacitance $C_2$ formed by the ring-shaped electrode 25 and the sample is increased as well. The arrangement shown in Fig. 4 can be seen as a first complex conductivity $X_{C1} = \dfrac{1}{i \cdot \omega \cdot C_1}$

that is connected in series with a resistance R of the sample volume between the electrodes, and with a second complex conductivity $X_{C2} = \dfrac{1}{i \cdot \omega \cdot C_2}$, whereby $\omega$ denotes the frequency of the AC signal, By increasing $C_1$, $C_2$, the contribution of the resistance R is enhanced relative to $X_{C1}$, $X_{C2}$. This allows to track changes dR of the resistance R, which might be due to analyte bands that pass through the detection cell, with an improved accuracy.

In Fig. 4, the inner diameter $ID_{SEP}$ is equal to $ID_{C1}$, and $ID_{C2}$. It has to be pointed out that the inner diameter $ID_{SEP}$ of the separation flow path can be chosen independently of the inner diameters $ID_{C1}$ and $ID_{C2}$. The innerdiameter $ID_{SEP}$ of the separation flow path might as well differ from $ID_{C1}$ and $ID_{C2}$.

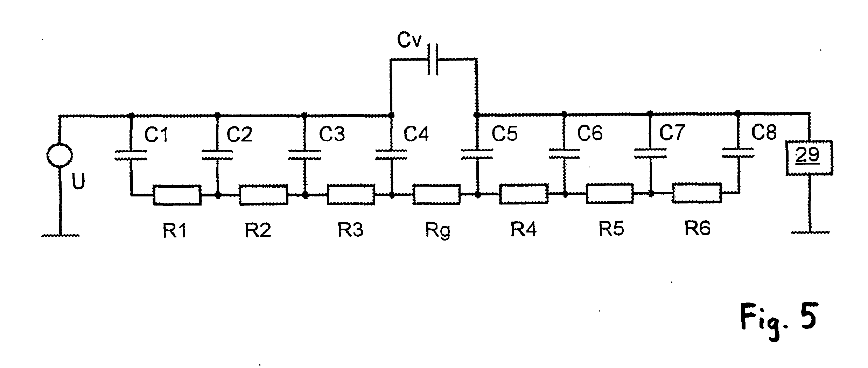

Fig. 5 shows an approximate equivalent circuit of a contactless detection cell. In principle the capacitive coupling of both electrodes, the transmitter electrode and the receiver electrode, to the real electrolyte resistance in the detection channel forms a spatially distributed RC network. Such spatially distributed structures are difficult to analyze precisely, therefore we assume that resistivity of the sample in the detection channel can be equidistantly divided into a number of segments forming individual resistors, R1-R6. All the resistors are connected in series. The coupling of the transmitter electrode and the receiver electrode with the solution in the detection channel is modeled by means of a set of capacitors, C1-C8. Rg is the resistor, which represents the resistivity of the sample placed between the transmitter electrode and the receiver electrode. A possible capacitive crosstalk between both electrodes is modeled by the capacity Cv. Further, U is the voltage of a high frequency AC power supply. The receiver 29 reads the electric current sensed by the receiver electrode.

Such equivalent circuit (possibly using division of the separation channel into more segments) allows with sufficient precision a complete calculation of all complex currents in all loops, as well as the current sensed by the receiver. This enables optimization of the geometry and other parameters of the contactless detection cell.

**Claims**

1. A contactless detection cell (15, 23) for detecting an electrical property of one or more sample compounds, said contactless detection cell (15, 23) comprising:

   a flow path comprising a detection channel;
   a transmitter electrode (16, 24) adapted for capacitively coupling an AC current into the detection channel;
   a receiver electrode (17, 25) adapted for receiving the AC current that has been coupled into the detection channel;

   wherein
   an inner cross-section in at least a section of the detection channel is different than an inner cross-section of the flow path towards the detection channel, and
   **characterized in that**
   at respective sites (27, 28) of the detection channel where the transmitter electrode (24) and the receiver electrode (25) are located, the detection channel's inner cross-section is larger than the detection channel's inner cross-section in a portion between the electrodes.

2. The detection cell of claim 1, wherein
   the transmitter electrode and the receiver electrode are separated from each other along an axis of the flow path;

3. The detection cell of claim 1 or 2, wherein
   the detection channel is implemented by means of a capillary with a reduced inner cross-section in the portion between the transmitter electrode and the receiver electrode.

4. The detection cell of any one of the above claims, wherein
   the electrical property is at least one of: conductivity, complex conductivity, impedance, resistance, reactance, relative permittivity.

5. A separation system comprising
   a separation flow path (14, 22) adapted for separating sample compounds of a given sample, and
   a contactless detection cell (15, 23) according to claim 1 or any one of the above claims, adapted for detecting the separated sample compounds.

6. The separation system of the preceding claim, wherein:

   the separation system is at least one of: an electrophoresis system, a liquid chromatography system, an electrochromatography system, or a combination thereof.

**Patentansprüche**

1. Kontaktlose Detektionszelle (15, 23) zum Detektieren einer elektrischen Eigenschaft einer oder mehrerer Probenverbindungen, wobei die kontaktlose Detektionszelle (15, 23) aufweist:

   einen Fließweg, der einen Detektionskanal aufweist;
   eine Sendeelektrode (16, 24) zum kapazitiven Einkoppeln eines Wechselstroms in den Detektionskanal;
   eine Empfangselektrode (17, 25) zum Empfangen des in den Detektionskanal eingekoppelten Wechselstroms;

   wobei sich ein Innenquerschnitt in mindestens einem Abschnitt des Detektionskanals von einem Innenquerschnitt des Fließweges zum Detektionskanal hin unterscheidet, und
   **dadurch gekennzeichnet, dass**
   an bestimmten Stellen (27, 28) des Detektionskanals, wo sich die Sendeelektrode (24) und die Empfangselektrode (25) befinden, der Innenquerschnitt des Detektionskanals größer als der Innenquerschnitt des Detektionskanals in einem Teil zwischen den Elektroden ist.

2. Detektionszelle nach Anspruch 1, wobei:

die Sendeelektrode und die Empfangselektrode entlang einer Achse des Fließweges voneinander getrennt sind.

**3.** Detektionszelle nach Anspruch 1 oder 2, wobei
der Detektionskanal unter Verwendung einer Kapillare mit einem verringerten Innenquerschnitt in dem Teil zwischen der Sendeelektrode und der Empfangselektrode realisiert wird.

**4.** Detektionszelle nach einem der obigen Ansprüche, wobei
als elektrische Eigenschaft mindestens eine der folgenden Eigenschaften infrage kommt: Leitfähigkeit, komplexe Leitfähigkeit, Scheinwiderstand, Widerstand, Blindwiderstand, Dielektrizitätskonstante.

**5.** Trennsystem, das aufweist:

einen Trennungs-Fließweg (14, 22) zum Trennen der Probenverbindungen einer vorgegebenen Probe, und eine kontaktlose Detektionszelle (15, 23) nach Anspruch 1 oder einem der vorhergehenden Ansprüche zum Detektieren der getrennten Probenverbindungen.

**6.** Trennsystem nach dem vorhergehenden Anspruch, wobei:

als Trennsystem mindestens eines der folgenden Trennsysteme infrage kommt: ein Elektrophoreseystem, ein Flüssigkeitschromatographiesystem, ein Elektrochromatographiesystem oder eine Kombination dieser Systeme.

**Revendications**

**1.** Cellule de détection sans contact (15, 23) pour la détection d'une propriété électrique d'un ou de plusieurs composés d'échantillonnage, ladite cellule de détection sans contact (15, 23) comprenant :

un trajet comprenant un canal de détection ;
une électrode de transmission (16, 24) adaptée pour le couplage capacitif d'un courant alternatif au canal de détection ;
une électrode de réception (17, 25) adaptée pour recevoir le courant alternatif qui a été couplé au canal de détection ;

dans laquelle une section transversale interne, dans au moins une partie du canal de détection, est différente d'une section transversale interne du trajet menant au canal de détection,
**caractérisée en ce que**
à des endroits respectifs (27, 28) du canal de détection où l'électrode de transmission (24) et l'électrode de réception (25) sont situées, la section transversale interne du canal de détection est plus grande que la section transversale interne du canal de détection dans une partie entre les électrodes.

**2.** Cellule de détection suivant la revendication 1, dans laquelle
l'électrode de transmission et l'électrode de réception sont séparées l'une de l'autre sur un axe du trajet ;

**3.** Cellule de détection suivant la revendication 1 ou 2, dans laquelle
le canal de détection est réalisé au moyen d'un capillaire avec une section transversale interne réduite dans la partie entre l'électrode de transmission et l'électrode de réception.

**4.** Cellule de détection suivant l'une quelconque des revendications ci-dessus,
dans laquelle la propriété électrique est au moins l'une des propriétés suivantes : conductivité, conductivité complexe, impédance, résistance, réactance, permittivité relative.

**5.** Système de séparation comprenant
un trajet de séparation (14, 22) adapté pour séparer les composés d'échantillonnage d'un échantillon donné, et une cellule de détection sans contact (15, 23) suivant la revendication 1 ou l'une quelconque des revendications ci-dessus, adaptée pour détecter les composés d'échantillonnage séparés.

**6.** Système de séparation suivant la revendication qui précède, dans lequel :

le système de séparation est au moins l'un des systèmes suivants : système par électrophorèse, système par chromatographie en phase liquide, système par électrochromatographie, ou combinaison desdits systèmes.

Fig. 1

Fig. 2

$ID_{SEP}$

18

16

17

$ID_{DET}$

OD

14

15

11

EP 1 725 860 B1

Fig. 3

Fig. 4

Fig. 5

EP 1 725 860 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020067174 A1
- WO 0075650 A1

- US 20030222664 A1

### Non-patent literature cited in the description

- **M. Hanna et al.** Novel three-dimensional capillary electrophoresis system for complex and trace analysis. *J. Chromatogr.,* 2000, vol. A894 (117), 128
- **A.J. Zemann.** Contactless Conductivity Detection for Capillary Electrophoresis. *Anal. Chem.,* 1998, vol. 70, 563-567

- **K. Mayrhofer et al.** Capillary Electrophoresis and Contacless Conductivity Detection of Ions in Narrow Inner Diameter Capillaries. *Anal. Chem.,* 1999, vol. 71, 3828-3833